Europäisches Patentamt

European Patent Office

Office européen des brevets

(19)

(11) Publication number: 0 392 740
A2

(12) # EUROPEAN PATENT APPLICATION

(21) Application number: 90303651.5

(51) Int. Cl.5: H02K 5/167

(22) Date of filing: 05.04.90

(30) Priority: 08.04.89 GB 8907963

(43) Date of publication of application:
17.10.90 Bulletin 90/42

(84) Designated Contracting States:
DE FR GB IT NL

(71) Applicant: Smiths Industries Public Limited
Company
765, Finchley Road
London, NW11 8DS(GB)

(72) Inventor: Thomas, Andrew Ashleigh
95, Farmers Close
Witney, Oxfordshire OX8 6NR(GB)
Inventor: Dolan, David John
54, Ducklington Lane
Witney, Oxfordshire OX8 7JB(GB)

(74) Representative: Flint, Jonathan McNeill
SMITHS INDUSTRIES PUBLIC LIMITED
COMPANY 765 Finchley Road
London NW11 8DS(GB)

(54) Motor bearing assemblies.

(57) A sleeve bearing for a motor has a lubricant reservoir (16) formed by a high temperature resistant lubricant absorbed into a felt pad. An annular wall (15) extends axially of the motor and supports a part of the reservoir externally of the wall. Four imperforate channels (31 to 34) extend along the internal surface of the wall, tapering so that they are deeper adjacent the sleeve bearing where they open into the reservoir. The width of the channels is about 33% the total circumference of the wall. An O-ring (29) embracing the shaft (2) within the wall throws oil outwardly onto the wall so that it flows along the grooves into the reservoir. A PTFE washer (25) with a grooved surface is mounted on the shaft on the opposite side of the bearing.

*Fig.2.*

# MOTOR BEARING ASSEMBLIES

This invention relates to motor bearing assemblies of the kind including a sleeve bearing embracing a shaft of the motor, a lubricant reservoir surrounding the sleeve bearing and arranged to supply lubricant to the sleeve bearing, the lubricant reservoir containing a high temperature resistant lubricant absorbed into a fibre member and an annular member extending axially of the motor shaft and supporting a part at least of the lubricant reservoir located externally around said annular member.

The invention is more particularly concerned with bearing assemblies for electric motors which are capable of operating at high temperature.

Motor bearings generally take one of two different forms. They can either include a race of ball bearings or a sleeve bearing. Ball bearings can be capable of operating at high temperature but have the disadvantages of being relatively expensive and can be noisy, especially after wear has occurred. Sleeve bearings have the advantages of being relatively inexpensive and quiet but have not until now been suitable for operation at high temperatures. This is because the high temperatures can damage the lubricant by oxidation or evaporation, and can lower its viscosity leading to an increased risk of leakage thereby reducing the operating life of the bearing.

It is an object of the present invention to provide a sleeve bearing that is capable of operating at high temperatures.

According to the present invention there is provided a motor bearing assembly of the above-specified kind, characterised in that the annular member has at least three channels that extend axially along the internal surface of the annular member, that the channels are imperforate along at least the major part of the length over which the fibre member is supported such as to prevent fibres leaving the reservoir, that the total width of the channels is at least about 25% of the circumference of the annular member, that the channels open into the lubricant reservoir at one end closer the sleeve bearing, that the assembly includes at least one radially extending member mounted on the motor shaft for rotation therewith, and that the radially extending member is located within the annular member towards the end of the channels further from the sleeve bearing such that rotation of the shaft causes any lubricant flowing onto the annular member to be thrown outwardly by centrifugal force onto the inner surface of the annular member and to flow along the channels back into the lubricant reservoir.

The total width of the channels is preferably about 33% of the circumference of the annular member. The channels are preferably deeper adjacent the sleeve bearing than away from the sleeve bearing. The assembly may include four channels equally spaced from one another around the annular member. The radially extending member and the channels are preferably located on the side of the sleeve bearing opposite the rotor of the motor. The assembly may include a second radially extending member mounted on the shaft for rotation therewith, the second radially extending member being located on the opposite side of the sleeve bearing from the first radially extending member. At least one radially extending member may be formed with a plurality of radial grooves on the side facing the sleeve bearing. At least one of the radially extending members may be of polytetrafluorethylene.

A motor with a bearing according to the present invention, will now be described, by way of example, with reference to the accompanying drawings, in which:

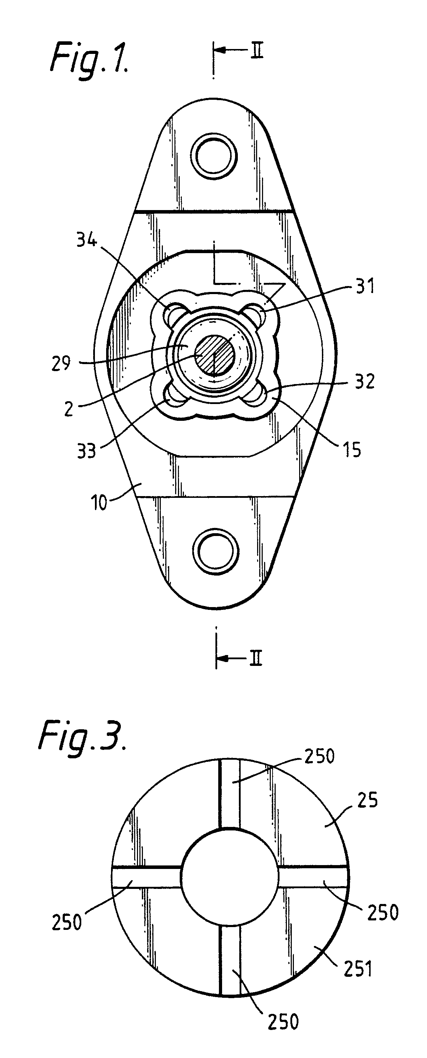

Figure 1 is a cross-sectional elevation of the motor;

Figure 2 is a transverse section along the line II - II of Figure 1; and

Figure 3 is an elevation view of a part of the motor.

The motor comprises a rotor 1 mounted on a shaft 2 and rotatable within stator coils 3 wound on laminations 4. The shaft 2 is supported at its right hand end by a sleeve bearing 5 and at its left hand end by a similar or different bearing which, for simplicity, is not shown.

The bearing 5 is contained within a bearing housing 10 machined or cast from a metal such as an aluminium alloy. The housing 10 has a central aperture 11, through which the shaft 2 extends, the aperture having a tapered, frusto-conical surface which is smaller in diameter away from the rotor 1. An annular cavity 13 is formed within the housing 10, concentric with the shaft 2, between an outer circular wall 14 and an inner annular wall 15. The cavity 13 contains a part of a lubricant reservoir 16 which is formed by a wad of felt or similar fibres, saturated with a high temperature resistant oil. The reservoir 16 extends over the left-hand end of the annular wall 15.

Rotatably mounted on the shaft 2 is a conventional sleeve bearing member 20 within which the shaft rotates. The bearing member 20 is of a sintered metal and is of a generally barrel shape with a convex outer surface 21. The outer surface 21 of the bearing member 20 is contacted centrally by the lubricant reservoir 16 and is supported at its right hand end by a tapered, frusto-conical bearing seating 22 formed around the inner edge of the annular wall 15. The left hand end of the bearing member 20 is supported by a retaining plate 17 with a central tapered collar 23 that embraces the bearing member. The retaining plate 17 also supports the left-hand end of the felt reservoir 16, the external diameter of the retaining plate being slightly smaller than that of the cavity 13 so that an annular passage 18 is formed into the reservoir around the retaining plate. A sealing plate 19 extends across the left-hand end of the cavity 13 and holds the retaining plate 17 in position.

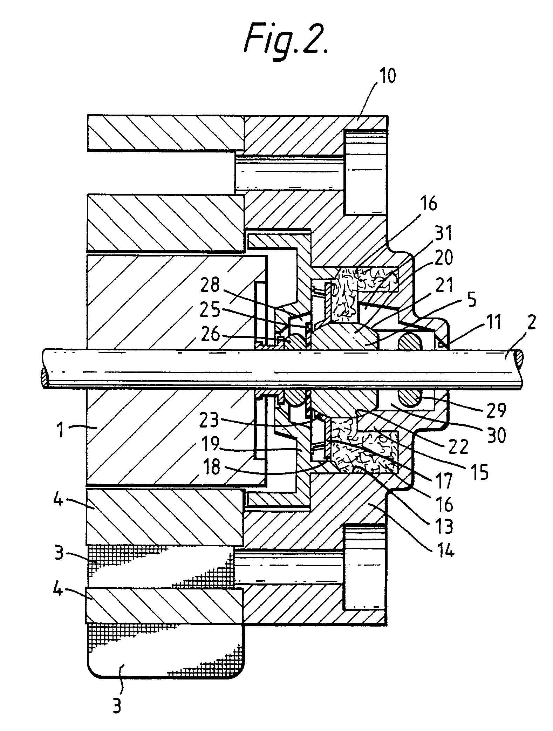

The bearing member 20 is spaced from the rotor 1 by a radially extending member in the form of a circular washer 25 that abuts the bearing member. The washer 25 may be of polytetrafluroethylene and may have radial grooves 250 formed in one surface 251 as shown in Figure 3. The grooved surface 251 is on the right in Figure 2 adjacent the bearing member 20. The grooves 250 enable oil flow over the surface of the washer 25 and hence improve lubrication where the washer rubs against the bearing on rotation. An 'O'-ring 26 of a resilient material such as Viton encircles the shaft 2 against the left side of the wsher 25. Interposed between the 'O'-ring 26 and the rotor 1 is a cylindrical spacing sleeve 27 which may be of metal or a high temperature resistant plastics material. The washer 25 and 'O'-ring 26 are located within a cavity 28 formed between the sealing plate 19 and the reservoir 16 that communicates with the passage 18 to the reservoir.

To the right of the bearing member 20, that is, on the opposite side of the bearing member from the rotor 1, a second 'O' ring 29 is mounted on the shaft substantially equidistant from the bearing member 20 and the aperture 11 through the housing 10. The bearing member 20 is located in a cavity 30 formed within the annular wall 15. On the inner surface of the wall 15 are formed four oil return channels 31 to 34 spaced equally around the wall. The channels 31 to 34 extend axially and open at their left-hand end into that part of the reservoir 16 which extends across the annular wall. The total width of the channels 31 to 34 is at least about 25% the internal circumference of the wall 15 and is preferably about 33% of the circumference so that they occupy a significant part of the internal area of the wall. The channels 31 to 34 taper in depth from the right hand end, further from the bearing member, to their left hand end where they are deeper. The channels 31 to 34 are imperforate along their length and communicate with the reservoir 16 only at their left hand end.

In operation, contact of the bearing member 20 with the fibre wad of the lubricant reservoir 16 causes the lubricant to be applied to the bearing member and to flow to the bearing seating 22 and to the collar 23 on the retaining plate 17. Any oil flowing beyond the collar 23 will flow onto the washer 25 and will be thrown outwardly by centrifugal force into the cavity 27 from where it will flow via the passage 18 around the retaining plate 17 back into the reservoir 16. Any oil flowing in the opposite direction, that is, beyond the seating 22, will flow along the shaft 2 to the O-ring 29 where it will be thrown outwardly by centrifugal force onto the inner surface of the wall 15. The oil will flow into the channels to 31 to 34 and, because of their inclined floors, will flow back along their length to where the end of the wall contacts the reservoir 16 and thereby re-enter the reservoir.

The bearing is capable of operating satisfactorily at about 120 degrees C for 20,000 hours without leakage when operating in a horizontal orientation. In order to operate correctly at these temperatures, the lubricants used will generally be relatively viscous at room temperature. The wide channels provided by the bearing of the present invention ensure, even at low temperatures, during start up, that the lubricant is returned to the reservoir without leakage. By making the channels open into the reservoir only at their ends, rather than along their lengths, the risk of fibres coming astray from the reservoir and entering the cavity 30 is reduced.

## Claims

1. A motor bearing assembly including a sleeve bearing embracing a shaft of the motor, a lubricant reservoir surrounding the sleeve bearing and arranged to supply lubricant to the sleeve bearing, the lubricant reservoir containing a high-temperature-resistant lubricant absorbed into a fibre member, an annular member extending axially of the motor shaft and supporting a part at least of the lubricant reservoir located externally around said annular member, characterised in that the annular member (15) has at least three channels (31 to 34) that extend axially along the internal surface of the annular member, that the channels (31 to 34) are imperforate along at least the major part of the length over which the fibre member is supported such as to prevent fibres leaving the reservoir (16), that the total width of the channels (31 to 34) is at least about 25% of the circumference of the annular members that the channels (31 to 34) open into the lubricant reservoir (16) at one end closer the sleeve bearing (20), that the assembly includes at least one radially extending member (25) mounted on the motor shaft (2) for rotation therewith, and that the radially extending member (29) is located within the annular member (15) towards the end of the channels (31 to 34) further from the sleeve bearing (20) such that rotation of the shaft (2) causes any lubricant flowing onto the annular member (29) to be thrown outwardly by centrifugal force onto the inner surface of the annular member and to flow along the channels back into the lubricant reservoir (16).

2. A motor bearing assembly according to claim 1, characterised in that the total width of the channels (31 to 34) is about 33% of the circumference of the annular member (15).

3. A motor bearing assembly according to Claim 1 or 2, characterised in that the channels (31 to 34) are deeper adjacent the sleeve bearing (20) than away from the sleeve bearing.

4. A motor bearing assembly according any one of the preceding claims, characterised in that the assembly includes four channels (31 to 34) equally spaced from one another around the annular member (15).

5. A motor bearing assembly according to any one of the preceding claims, characterised in that the radially extending member (29) and the channels (31 to 34) are located on the side of the sleeve bearing (20) opposite the rotor (1) of the motor.

6. A motor bearing assembly according to any one of the preceding claims, characterised in that the assembly includes a second radially extending member (25) mounted on the shaft (2) for rotation therewith, and that the second radially extending member (25) is located on the opposite side of the sleeve bearing (20) from the first radially extending member (29).

7. A motor bearing assembly according to any one of the preceding claims, characterised in that at least one radially extending member (25) is formed with a plurality of radial grooves (250) on the side (251) facing the sleeve bearing (20).

8. A motor bearing assembly according to any one of the preceding claims, characterised in that at least one of the radially extending members is of polytetrafluoroethylene.

## Fig.1.

II

34

31

29

2

33

32

15

10

II

## Fig.3.

250

25

250

250

251

250

# Fig.2.